# EUROPEAN PATENT APPLICATION

(11) **EP 2 418 559 A2**
(43) Date of publication of application: **15.02.2012**
(21) Application number: 11380052.8
(22) Date of filing: 14.06.2011
(51) Int. Cl.: G06F 1/16

(54) **PC convertible laptop**

(30) Priority: 22.06.2010 ES 201000657 U
(71) Applicant: Palomino Segura, Juan, 28224 Madrid (ES); Rodriguez Matia, Eduardo, 28223 Madrid (ES)
(72) Inventor: Palomino Segura, Juan, 28224 Madrid (ES); Rodriguez Matia, Eduardo, 28223 Madrid (ES)

(57) **Abstract**

The computers traditionally known as *laptops* have been historically designed as a unique structural unit, in which all its components are integrated and form it, producing physical risks to the user after an extended use and exposure in time. These risks are musculoskeletal disorders, visual fatigue and mental fatigue.

In order to minimize these risks and provide the user the advantages of both the traditional laptop and personal computer, the structural model of the Convertible Laptop focuses on putting a mechanism of harnesses and/or magnets in the keyboard which enables the user to extract it (partially or totally) from the rest of the computer. The keyboard (once it is extracted) has small folding supports in its base enabling it to adapt its inclination. Furthermore, the base of the computer out of which the keyboard is extracted can be lifted and a support/s under it be unfolded in order to adjust the elevation of the screen *(Vid.* **Figure 5**).

## Description

### Purpose of the invention:

The invention included in this request refers to the adaptation of the structure of a laptop (onwards "**Convertible Laptop**") to the ergonomic needs that derive from its extended use in time.

The structure of the Convertible Laptop focuses on providing the user the possibility of adapting - from a functional point of view - the elevation of the screen and its orientation, as well as extracting the keyboard of the rest of the components of the computer. The purpose of these features is to provide the user the possibility of adopting correct ergonomics in the use of a laptop.

### Precedents of the invention:

The computers traditionally known as *laptops* centre their configuration as of today in providing the user an easily portable computer. In order to achieve this purpose, the design of the traditional laptops has been set up as a unique structural unit, in which all the components are integrated and form it, included but not limited to, the keyboard, the screen, the processor, the mouse, etc. As a result of the aforementioned, the user encounters a number of limitations arising out of the design and of those related to not being able to dispose autonomously of its different components.

The consequences that derive from the limitations associated to the traditional laptops' design - other than commodity - become evident with the physical risks to which the user is exposed to after an extended use in time. The principal risk associated to the continued use of these kind of computers are the musculoskeletal disorders, visual fatigue and mental fatigue.

### Explanation of the invention:

The structural model proposed by the Convertible Laptop focuses on:
1) Making independent the keyboard and tactile mouse of the rest of components of the computer, especially the screen.
2) Adapt the elevation of the screen to the necessities of the user.
3) Supply the keyboard with small folding supports that enables the user to incline it taking into account his necessities.

The aforementioned features are implemented in a unique computer, incorporating different application and utility levels. This structure enables the user to settle the Convertible Laptop to his ergonomic needs, preventing him from the risks associated to the adoption of incorrect positions and the abovementioned disorders.

### Brief explanation of the drawings:

**Figure 1****:** Shows the Convertible Laptop folded or closed.
**Figure 2****:** Shows the Convertible Laptop opened in the traditional way.
**Figure 3****:** Shows the Convertible Laptop in its maximum level of display, that is, making the keyboard independent of the rest of components of the computer and elevating the screen in accordance with the user's necessities.
**Figure 4****:** Shows the different orientations the screen can adopt with respect to the keyboard.
**Figure 5****:** Shows the different inclination positions the keyboard can adopt.
**Figure 6****:** Shows the different elevations the screen can adopt with respect to the surface where the Convertible Laptop stands.

### Description of the invention:

In order to describe the Convertible Laptop's functional structure it is necessary to refer to two different positions. The first one is when the Convertible Laptop is folded or closed (Position 1). The second one is when the Convertible Laptop is opened (Position 2).

### Position 1:

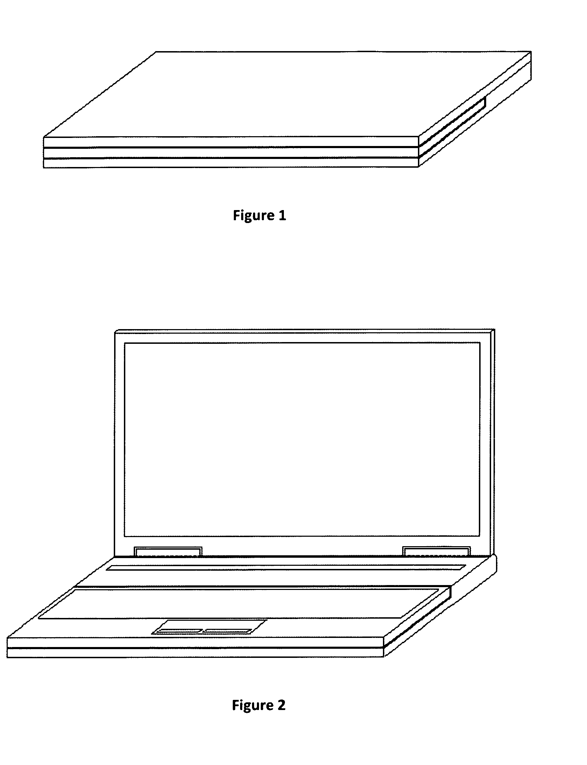

In this position the Convertible Laptop folds all its components making it easily transportable. In position 1 the Convertible Laptop does not entail any innovation with respect to the traditional laptops *(vid.* Figure 1).

### Position 2:

Within Position 2, the Convertible Laptop provides two different levels of display, oriented to different applications.

### - Level 1:

When the Convertible Laptop is unfolded, Level 1 provides the user the possibility of using it in the conventional way the traditional laptops have implemented. With this regard, the Convertible Laptop does not entail either an innovation. *Vid*. **Figure 2****.**

### - Level 2:

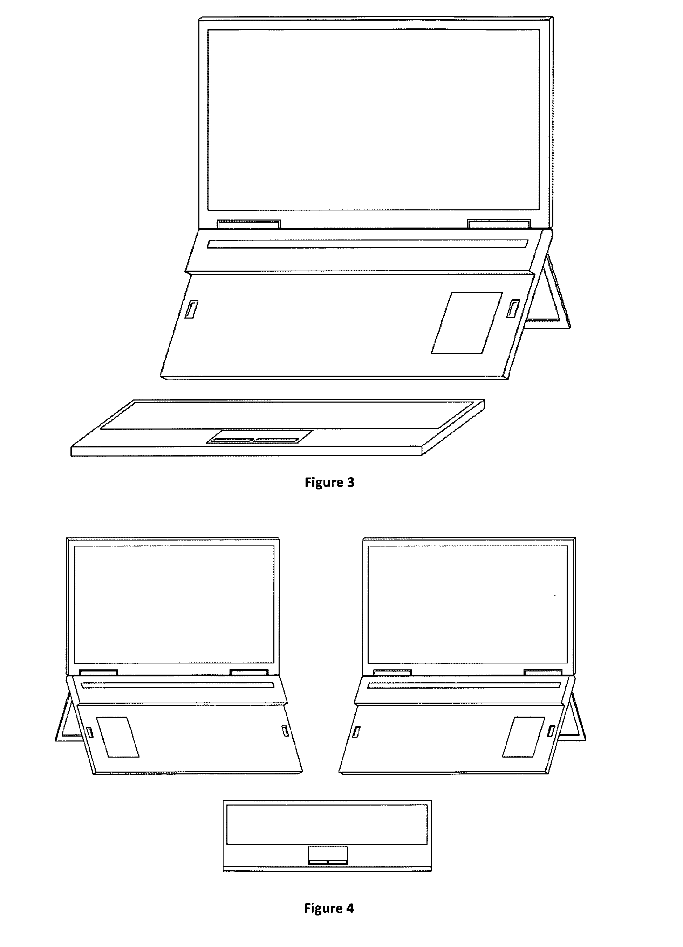

Regarding the keyboard, the purpose of Level 2 is to arrange the computer in order to provide the user the advantages that arise from the autonomy of its components, especially from the independence of screen - keyboard. As it can be observed in **Figure 3****,** the keyboard is extracted from the computer's base (onwards **"Computer's Base"),** becoming a totally (wireless connection with the rest of the computer) or partially (wired to the rest of the computer) independent component, providing consequently the abovementioned advantages. As a result, the processor, printed circuit board (PCB),etc. remain in the Computer's Base, while the keyboard and tactile mouse are independent to the rest of the computer.

As a consequence of the keyboard's autonomy, the user is enabled to obtain the benefit of orienting the screen without this affecting the keyboard's position in front of the user. *Vid.* **Figure 4****.**

This entails a functional innovation in comparison with the traditional laptop's structure.

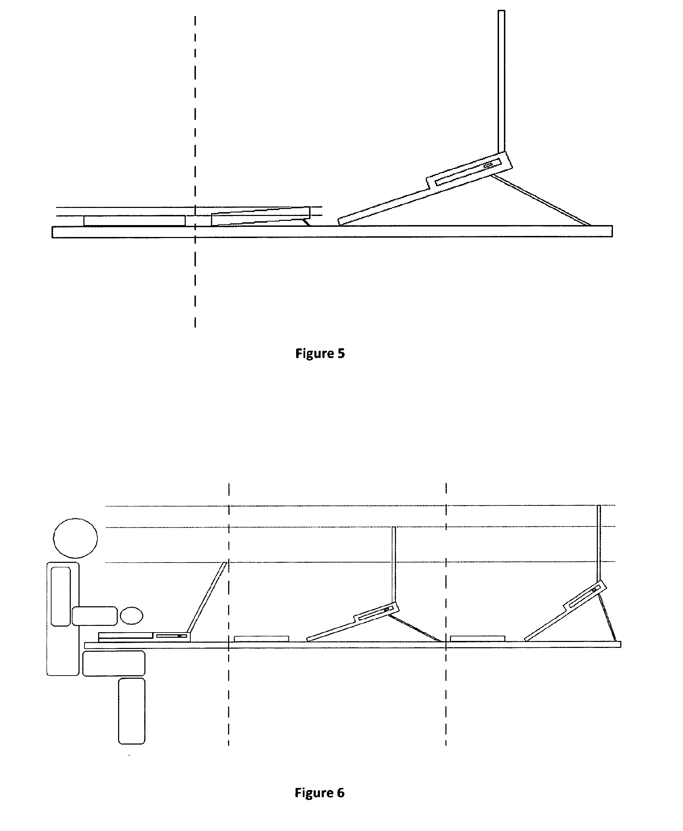

Additionally, the Convertible Laptop's keyboard incorporates in its base small folding supports which enable it to arrange its inclination. *Vid.* **Figure 5****.**

Regarding the screen, Level 2 provides the user the possibility of arranging it in accordance with his elevation ergonomic needs. As it can be observed in **Figure 6****,** this is obtained by raising the screen and using as a support the Computer's Base. The second support used to raise the screen is extracted from the Computer's Base. As a result, the elevation of the screen with respect to the surface where it stands can be arranged by determining the angle between the joint of the supports.

The raised position of the Computer's Base incorporated by the Convertible Laptop provides two important advantages.

The first advantage is obtained by providing a wider surface under the screen that can be used for the collocation of other components and/or external elements. For example, the collocation of a numeric keyboard *(Vid.* **Figure 3**), an extra screen, papers, etc.

Additionally, as a result of the raised position of the Computer's Base, the Convertible Laptop obtains a better refrigeration of its components, preventing the system to overheat as a consequence of its flat position on the surface where it stands.

Furthermore, it is important to state that the innovations implemented by the Convertible Laptop are not limited to incorporating Level 2. As well as providing the innovative features this level offers the user, the major innovation of the Convertible Laptop resides in the incorporation of the different levels of application and utility combining them in a sole computer.

## Claims

1. Convertible Laptop, characterized for having a mechanism of harnesses and/or magnets which enables to extract the keyboard and tactile mouse from the rest of the components of the portable computer, and especially from the screen, making them totally (wireless connection with the rest of the computer) or partially (wired to the rest of the computer) independent.

2. Convertible Laptop, in accordance with the aforementioned claim, characterized for arranging the base of the portable computer as an instrument for adjusting the elevation of the screen. This is managed by incorporating folded supports that enable to adapt the elevation of the screen to the ergonomic needs of the user, independently from the keyboard.

3. Convertible Laptop, in accordance with the aforementioned claims, characterized for providing the extracted keyboard with small folded supports that enable it to adjust its inclination to the ergonomic needs of the user.
